Europäisches Patentamt

European Patent Office

Office européen des brevets

(11) Publication number: **0 073 836**
**B1**

# EUROPEAN PATENT SPECIFICATION

(45) Date of publication of patent specification: **05.06.85**

(21) Application number: **82900663.4**

(22) Date of filing: **08.03.82**

(86) International application number:
**PCT/JP82/00062**

(87) International publication number:
**WO 82/03271 30.09.82 Gazette 82/23**

(51) Int. Cl.⁴: **F 28 D 17/00, A 01 G 9/24, F 24 D 11/00, F 24 J 2/00**

(54) **Latent heat accumulating greenhouses.**

(30) Priority: **13.03.81 JP 36131/81 u**
**13.03.81 JP 37146/81**

(43) Date of publication of application:
**16.03.83 Bulletin 83/11**

(45) Publication of the grant of the patent:
**05.06.85 Bulletin 85/23**

(84) Designated Contracting States:
**DE FR GB NL SE**

(56) References cited:
**EP-A-0 028 087**
**FR-B-2 428 223**
**JP-A-50 124 236**
**JP-A-51 129 742**
**JP-A-51 135 234**
**JP-A-53 131 557**
**JP-A-54 091 444**
**JP-A-54 091 444**
**JP-A-56 082 351**
**JP-A-57 014 182**
**JP-B-54 011 011**
**JP-U-51 027 964**
**JP-U-54 143 459**
**JP-U-54 143 464**
**JP-U-55 056 570**
**JP-U-55 084 486**

(73) Proprietor: **KUBOTA, LTD**
**2-47, Shikitsuhigashi 1-chome Naniwa-ku Osakashi Osaka 556 (JP)**

(72) Inventor: **YANO, Naomichi**
**Kubota Ltd. 2-47, Shikitsuhigashi 1-chome Naniwa-ku Osaka-shi Osaka 556 (JP)**
Inventor: **MAKITO, Isao**
**Kubota Ltd. 2-47, Shikitsuhigashi 1-chome Naniwa-ku Osaka-shi Osaka 556 (JP)**
Inventor: **ITO, Hajime**
**Kubota, Ltd. 2-47, Shikitsuhigashi 1-chome Naniwa-ku Osaka-shi Osaka 556 (JP)**
Inventor: **TANAKA, Shigeru**
**Kubota, Ltd. 2-47, Shikitsuhigashi 1-chome Naniwa-ku Osaka-shi Osaka 556 (JP)**

(74) Representative: **MacFarlane, John Anthony Christopher**
**HASELTINE LAKE & CO. Hazlitt House 28, Southampton Buildings Chancery Lane London WC2A 1AT (GB)**

(56) References cited:
**JP-U-55 143 455**
**JP-Y-39 006 676**
**US-A-4 205 656**
**US-A-4 287 942**

Courier Press, Leamington Spa, England.

## Description

This invention relates to latent heat accumulating greenhouses.

JP—A—51-129742 and JP—A—51-135234 disclose a greenhouse solar heating system in which a plurality of heat accumulating elements enclosing latent heat accumulating material are disposed at the position through which the sun's rays pass into the greenhouse, and air circulating means such as fan is provided. However, in these systems, the heat accumulating elements are costly to manufacture, require a large scale mounting means and can not be attached or detached easily.

According to the present invention there is provided a latent heat accumulating greenhouse including a heat accumulating member enclosing latent heat accumulating material therein and disposed at a position where the sun's rays pass into the greenhouse, and a fan for effecting air circulation within the greenhouse; characterised in that a heat accumulating chamber is provided in the greenhouse partitioned by a transparent sheet from the remainder of the interior of the greenhouse between an attic and a floor surface and facing north; in that the fan is a blower fan disposed to confront an opening in the lower part of the heat accumulating chamber; in that the heat accumulating member is in the heat accumulation chamber, has a large number of light transmitting windows and encloses therein the latent heat accumulating material which is a phase transformation heat accumulating material; and in that the heat accumulating member is detachably suspended in a position close to windows at the north side of the greenhouse. In this greenhouse the arrangement is such that solar heat during sun shining hours is introduced into the heat accumulating chamber, which can be made narrow, for accumulation of heat by the use of the phase transformation heat accumulating material, and the heat thus accumulated is discharged during the period in which external atmospheric temperature has fallen. By this arrangement high heat absorbing efficiency may be achieved with a simple construction, and a large amount of endothermic heat accumulation can be effected. Owing to the above, heating by heat radiation may be continued for a long period of time, and therefore, only an extremely small amount of auxiliary heat is necessary, with a consequent saving of fuel cost.

In a preferred embodiment the heat accumulating member comprises a rectangular flat bag-like container of flexible material which is divided into a plurality of sections by tape-like sealing portions extending in parallel relation with respect to the longitudinal side edges and lateral side edges of the container, the latent heat accumulating substance being enclosed in each of the divided sections. Each of the sealing portions can be of a width sufficient to be cut without leakage of the latent heat accumulating substance and thus the size of the mat can be readily and quickly altered for installation according to the size of the heat receiving surface.

For a better understanding of the invention and to show how the same may be carried into effect, reference will now be made, by way of example, to the accompanying drawing, in which:—

Figure 1 is a longitudinal sectional view of part of a latent heat accumulating greenhouse;

Figure 2 is a front view of part of a heat accumulating member employed in the greenhouse of Figure 1,

Figure 3 is a cross-section taken along line III—III of Figure 2, and

Figure 4 is a fragmentary view of another form of heat accumulating member.

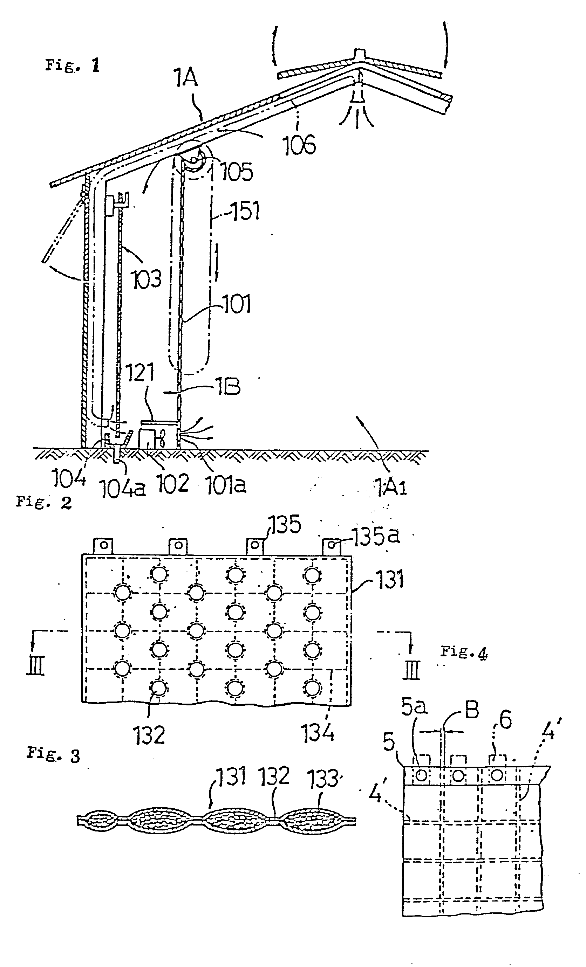

In Figure 1, the greenhouse 1A has a heat accumulating chamber 1B provided in its interior facing the north side. The heat accumulating chamber 1B is partitioned from the remainder of the interior of the greenhouse by a transparent plastic sheet 101 which can be wound up except for a small gap with respect to the roof. At the lower portion of the heat accumulating chamber 1B, there is disposed at least one blower fan 102, which confronts at least one opening 101a provided in a skirt portion of the plastic sheet 101 so as to feed air from inside the heat accumulating chamber 1B into a greenhouse main portion 1A1, through the opening 101a. In the vicinity of window panes facing the north side in the heat accumulating chamber 1B, a heat accumulating member 103 in the form of a curtain is suspended so as to cover generally the entire area of the window panes.

As shown in Figures 2 and 3, the heat accumulating member 103 is composed of a bag-like main body 131 employing a plastic film and formed with a large number of circular windows 132 arranged in the direction of its thickness. The windows 132 are useful for transmitting light rays therethrough. Phase transformation heat accumulating medium 133, such as $CaCl_2 \cdot 6H_2O$, is enclosed in the bag-like main body 131.

The interior of the bag-like main body 131 is partitioned into a check-like pattern by heat seals 134 so as to be divided into many sections. By providing these internal partitions, not only is the movement of the medium within the main body 131 restricted, but if the bag-like main body 131 should be broken, the amount of medium flowing out is limited to a minimum. At the top edge portion of the bag-like main body 131, tongue pieces 135 having holes 135a for hanging the main body 131 are provided.

On the ground below the suspended bag-like main body 131, a trough member 104 provided with a discharge pipe 104a is installed for collecting harmful substance issuing from the bag-like main body 131 should the main body be damaged. Diffusion of the substance into the greenhouse should the main body 131 be damaged is thus prevented.

When the transparent plastic sheet 101 is wound up it is housed in an attic inside the greenhouse. This sheet 101 can be freely wound up or lowered by a winch pulley 105 rotated by a chain 151.

During sun shining hours, the temperature within the greenhouse 1A is raised by receiving solar heat. Upon actuation of the blower fan 102 inside the heat accumulating chamber 1B, air heated up to a high temperature by direct contact with the roof is drawn into the heat accumulating chamber 1B through the gap between the transparent plastic sheet 101 and the roof thereover. When the temperature within the greenhouse reaches over 30°C, the phase transformation heat accumulating medium 133 within the heat accumulating member 103 absorbs heat to be decomposed to accumulate heat. Cool air deprived of heat is returned into the greenhouse main portion $1A_1$ through the opening(s) 101a in the skirt portion of the transparent plastic sheet 101.

During night time and rainy weather, when the temperature within the greenhouse falls below 27 to 30°C, $CaCl_2$ decomposed within the bag-like main body 131 combines with water to produce heat for heat radiation into the heat accumulating chamber 1B. By operating the fan 102, warm air thus produced in the heat accumulating chamber 1B is fed into the greenhouse main portion $1A_1$, for heating. Accordingly, during heat radiation by the phase transformation heat accumulating material 133, no other heating will normally be required. Heating by other means will be used only for short periods, for example, during very cold seasons or when rainy weather continues for a long period.

In Figure 1, a blower fan casing is indicated by numeral 121.

Since the heat accumulating member 103 can be readily detached, it can be removed for storing during periods when heat accumulation is not necessary. During such periods, if the transparent plastic sheet 101 is kept wound up, the heat accumulating chamber 1B may be used as an extension of the greenhouse main portion $1A_1$.

As described so far, since the heat accumulating chamber 1B partitioned by the transparent plastic sheet 101 and capable of being subjected to air circulation is provided at the portion facing the north side in the greenhouse 1A, and since there is detachably suspended in the heat accumulating chamber the heat accumulating member 131 in which the phase transformation heat accumulating medium 133 is enclosed, air circulation between the greenhouse main portion $1A_1$ and the heat accumulating chamber 1B may be effected without obstructing heat reception for the greenhouse main portion $1A_1$. Therefore, the heat accumulating member 103 absorbs heat at high efficiency for heat accumulation. Moreover, owing to the fact that the heat accumulating member 103 has a large area, the amount of heat accumulation thereof is also large, and consequently, duration of heat emissions during heat radiation is long. Furthermore, since the heat accumulating member 103 has many light transmitting windows 132, there is no possibility that light is significantly intercepted thereby. Additionally, the heat accumulating chamber 1B may readily be converted to be an extension of the greenhouse main portion $1A_1$ if the transparent plastic sheet 101 is wound up.

If the high temperature air at the upper part of the greenhouse is led to the lower portion within the heat accumulating chamber 1B through a duct 106, the heat accumulating effect can be further improved.

For the heat accumulating medium, the following substances may be employed in addition to what has already been stated above.

| Kind of medium | Melting temperature |
|---|---|
| $Na_2SO_4 \cdot 10H_2O$ | approximately 32°C |
| $Na_2SO_3 \cdot 5H_2O$ | approximately 48°C |
| Paraffin | approximately 46°C |

In Figure 4 seal portions 4' of the heat accumulating member are in the form of tapes extending in parallel relation with respect to the longitudinal side edges and lateral side edges of a rectangular flat bag-like container. Each of these seal portions 4' has a width B sufficient to be cut without leakage of the substance contained inside. It is to be noted here that each of the seal portions 4' may be provided with a cutting-off groove along its central line in a direction of its length so as to be readily cut without any cutting tool, and also that seal portions 5 may be provided along the longitudinal top edge and/or lateral side edges with holes 5a therein for hanging the heat accumulating member on, for example, a wall. Alternatively tongue pieces 6 may be provided on this edge or these edges.

## Claims

1. A latent heat accumulating greenhouse including a heat accumulating member (103) enclosing latent heat accumulating material (133) therein and disposed at a position where the sun's rays pass into the greenhouse, and a fan (102) for effecting air circulation within the greenhouse; characterised in that a heat accumulating chamber (1B) is provided in the greenhouse partitioned by a transparent sheet (101) from the remainder of the interior of the greenhouse between an attic and a floor surface and facing north; in that the fan (102) is a blower fan disposed to confront an opening (101a) in the lower part of the heat accumulating chamber (1B); in that the heat accumulating member (103) is in the heat accumulation chamber (1B), has a large number of light transmitting windows (132), and encloses therein the latent heat accumulating material (133) which is a phase transformation heat accumulating material; and in that the heat accumulating member is detachably suspended in a position close to windows at the north side of the greenhouse.

2. A latent heat accumulating greenhouse as claimed in claim 1, wherein the heat accumulating member (103) comprises a rectangular flat bag-like container of flexible material which is divided into a plurality of sections by tape-like sealing portions (4') extending in parallel relation with respect to the longitudinal side edges and lateral side edges of the container, the latent heat accumulating substance (133) being enclosed in each of the divided sections.

3. A latent heat accumulating greenhouse as claimed in claim 2, wherein each of the sealing portions (4') is of a width (B) sufficient to be cut without leakage of the latent heat accumulating substance (133).

## Revendications

1. Serre à accumulation de chaleur latente, du type comprenant un élément d'accumulation de chaleur (103) qui renferme intérieurement un matériau d'accumulation de chaleur latente (133) et qui est disposé à l'intérieur de la serre en un emplacement où passent les rayons du soleil, et un ventilateur (102) permettant d'assurer une circulation d'air à l'intérieur de la serre, caractérisée en ce qu'il est prévu dans cette serre une chambre d'accumulation de chaleur (1B) qui est séparée du reste de l'intérieur de la serre par une feuille transparente (101), entre un volume situé sous le toit et une surface de plancher, et qui fait face au nord, en ce que le ventilateur (102) est un ventilateur à rotor qui est disposé de manière à être tourné vers une ouverture (101a) ménagée dans la partie inférieure de la chambre d'accumulation de chaleur (1B), en ce que l'élément d'accumulation de chaleur (103) est disposé dans la chambre d'accumulation de chaleur (1B), présente un grand nombre de fenêtres de transmission de lumière (132) et renferme intérieurement le matériau d'accumulation de chaleur latente (133) qui est un matériau d'accumulation de chaleur par transformation de phase, et en ce que même élément d'accumulation de chaleur est suspendu de manière amovible en un emplacement voisin des fenêtres sur le côté nord de la serre.

2. Serre à accumulation de chaleur latente telle que revendiquée dans la revendication 1, dans laquelle l'élément d'accumulation de chaleur (103) comprend un récipient en matière souple, rectangulaire et plat, en forme de sac et qui est subdivisé en un certain nombre de section par des parties d'étanchéité (4') analogue à des bandes et qui s'étendent parallèlement aux bords des côtés longitudinaux et aux bords des côtés latéraux du récipient, la substance d'accumulation de chaleur latente (133) étant enfermée dans chacune de ces sections séparées.

3. Serre à accumulation de chaleur latente telle que revendiquée dans la revendication 2, dans laquelle chacune des parties d'étanchéité (4') présente une largeur (B) suffisante pour être découpée sans écoulement de la substance d'accumulation de chaleur latente (133).

## Patentansprüche

1. Latente Wärme speicherndes Gewächshaus mit einem Wärme speichernden Teil (103), welcher ein darin befindliches und latente Wärme speicherndes Material (133) umschließt und an einer Stelle angeordnet ist, wo die Sonnenstrahlen in das Gewächshaus gelangen, und mit einer Luftumwälzeinrichtung (102) innerhalb des Gewächshauses, dadurch gekennzeichnet, daß eine Wärmespeicherkammer (1B) innerhalb des Gewächshauses vorgesehen ist und nach Norden weist und vom restlichen Teil des Inneren des Gewächshauses zwischen einer Dachkonstruktion und einer Bodenfläche durch eine durchsichtige Tafel (101) getrennt ist, daß die Luftumwälzeinrichtung (102) ein einer Öffnung (101a) im unteren Teil der Wärmespeicherkammer (1B) gegenüberliegendes Gebläse ist, daß der Wärme speichernde Teil (103) sich in der Wärmespeicherkammer (1B) befindet, eine große Anzahl lichtdurchlässiger Fenster (132) aufweist und das latente Wärme speichernde Material (133) einschließt, welches ein Wärme durch Phasenumwandlung speicherndes Material ist, und daß der Wärme speichernde Teil an einer den Fenstern an der Nordseite des Gewächshauses nahe gelegenen Stelle lösbar aufgehängt ist.

2. Latente Wärme speicherndes Gewächshaus nach Anspruch 1, worin der Wärme speichernde Teil (103) einen rechteckigen, flachen, beutelartigen Behälter aus flexiblem Material aufweist, welcher durch sich parallel zu den Längsseitenrändern und den Schmalseitenrändern des Behälters erstreckende bandartige Dichtbereiche (4') in mehrere Abschnitte unterteilt ist, innerhalb derselben die latente Wärme speichernde Substanz (133) eingeschlossen ist.

3. Latente Wärme speicherndes Gewächshaus nach Anspruch 2, worin jeder der Dichtbereiche (4') eine Breite (B) besitzt, die ausreichend ist ohne Austreten der latente Wärme spiechernden Substanz (133) durchschnitten zu werden.

Fig. 1

Fig. 2

Fig. 3

Fig. 4